# EUROPEAN PATENT SPECIFICATION

(11) **EP 1 700 006 B1**
(45) Date of publication and mention of the grant of the patent: **27.03.2013**
(21) Application number: 03817948.7
(22) Date of filing: 12.08.2003
(51) Int. Cl.: B23P 15/02, F01D 17/16, F01D 5/28, F01D 5/14

(54) **VARIABLE NOZZLE DEVICE MADE FROM SHEET METAL**
AUS BLECH HERGESTELLTE VORRICHTUNG MIT VARIABLER DÜSE
DISPOSITIF A TUYERE VARIABLE EN TOLE

(43) Date of publication of application: 13.09.2006
(73) Proprietor: Honeywell International Inc., Morristown, NJ 07960 (US)
(72) Inventor: FIGURA, Giorgio, c/o HONEYWELL GARRETT, F-88150 Thaon-les-Vosges (FR); TISSERANT, Denis, c/o HONEYWELL GARRETT, F-88150 Thaon-les-Vosges (FR); WABINSKI, Guillaume, c/o HONEYWELL GARRETT, F-88150 Thaon-les-Vosges (FR)
(74) Representative: TBK
(86) International application number: PCT/EP2003/008936
(87) International publication number: WO 2005/014980

(56) References cited:
- CH-A- 162 526
- DE-A- 1 428 171
- DE-B- 1 033 966
- DE-C- 19 955 510
- GB-A- 545 587
- US-A- 3 038 698
- US-A- 5 380 152
- PATENT ABSTRACTS OF JAPAN vol. 2000, no. 03, 30 March 2000 (2000-03-30) & JP 11 336504 A (HITACHI LTD), 7 December 1999 (1999-12-07)

## Description

The present invention relates to a variable nozzle device, according to the features of claim 1 applicable to a turbocharger and, in particular, to a turbine of a turbocharger.

Turbochargers in particular for internal combustion engines are conventionally used in order to reduce the fuel consumption and to increase the output of the internal combustion engine.

Since internal combustion engines are subject to widely varying operational states such as rotational speeds and load conditions, the turbocharger also experiences differing conditions such as the exhaust flow rate, operational temperatures, or the like. Furthermore, intake requirements of pressurized intake air discharged from the compressor of the turbocharger differ in response to the variation of the operational conditions of the internal combustion engine.

Therefore, turbochargers have been developed which enable an adaptation to current operational conditions on the turbine side of the turbocharger. The adaptation to operational conditions on the turbine side includes, for example, the variation of the geometry of turbine inflow passages.

The US-Patent 4,643,640 proposes a nozzle for passing the fluid, such as the exhaust gas, comprising a plurality of vanes for directing the flow by exerting a swirl effect to the fluid and for adjusting the passage area of the nozzle. In such a structure according to the prior art, the vanes are supported rotatably in the passage. By appropriate rotating of the vanes, the swirl effect and/or the passage area can be set in accordance with the operational requirements.

Prior art document DE 14 28 171 A discloses a variable nozzle device adapted to be mounted in an exhaust gas turbine of a turbocharger. The variable nozzle device comprises an annular nozzle passage formed by a gap between two opposing wall members and at least one vane extending in said nozzle passage and being rotatably supported by a shaft attached to said vane.

It is the object of the present invention to provide a variable nozzle device in particular applicable to an exhaust gas turbine of a turbocharger with an improved vane structure which can be manufactured at low costs.

The object of the invention is solved by a variable nozzle device having the features of claim 1. According to the invention, there is also provided an exhaust gas turbine according to claim 6 and a turbocharger according to claim 7 comprising such a variable nozzle device. Further developments are set forth in the dependent claims.

According to a first aspect of the present invention, a variable nozzle device comprises an annular nozzle passage formed by a gap between two opposing wall members and at least one vane extending in said nozzle passage and being rotatably supported, wherein said vane is formed by a sheet metal contour and attached to a shaft.

The sheet metal made vane can be manufactured by a simple processing at low costs. Furthermore, the distance of the gap which varies according to different designs of the turbocharger. By a simple adaptation of the axial length of the sheet metal contour, this variation of the distance can be absorbed.

Preferably, said vane is formed by wrapping a strip of said sheet metal so as to form said contour as a loop.

Forming a loop and wrapping the same around the shaft is a simple way of manufacturing the vane, since only the outer contour of the vane is important for the flow characteristics of a vane to be used in a nozzle.

Preferably, a downstream tip of said vane is formed by joining two ends of said strip of said sheet metal. That is, the vane comprises only one strip which is bent so as to form the closed loop providing a tip end at the downstream end. Preferably, said two ends of said strip of said sheet metal are joined by spot welding, which provides a simple way to produce the vanes.

Preferably, said shaft extends into said sheet metal contour, and wherein said sheet metal contour is attached to said shaft at least at an outer peripheral portion thereof. Thereby, the sheet metal can be wrapped around the shaft so as to form contact portions between the shaft and the inside surface of the sheet metal contour.

Preferably, said sheet metal contour is attached to said shaft by spot welding at two peripheral portions of said shaft, which are diametrically opposed to each other. This structure enables a stable support of the vane on the shaft and a sufficient torque transmission for adjusting the rotational position of the vane.

Preferably, at least a portion of said shaft protrudes beyond an edge of said sheet metal contour by a predetermined amount so as to form a stepped portion contactable to one of said opposing walls members thereby separating said sheet metal contour from said one of said opposing wall members. By the provision of the protruding shaft portion beyond the edge of the sheet metal contour, a gap is formed between said edge and the surface of the wall facing to said edge of the vane. Thereby, the sticking phenomenon can be restricted and the frictional loss can be minimized.

According to a second aspect of the present invention, an exhaust gas turbine comprises a variable nozzle device according to the first aspect and a turbine wheel which is drivable by exhaust gas passed through the annular nozzle passage of said variable nozzle device.

According to a third aspect of the present invention, a turbocharger comprises an exhaust gas turbine according to the second aspect.

### BRIEF DESCRIPTION OF THE DRAWINGS

Preferable embodiments of the present invention are described in greater detail with reference to the drawings.
Fig. 1 shows a variable nozzle device according to a first embodiment of the present invention in a side view.
Fig. 2 shows the vane of Fig. 1 in a cross-sectional view along a line A-A of Fig. 1.
Fig. 3 shows a variable nozzle device according to a second embodiment of the present invention in a side view.
Fig. 4 shows a modification of the variable nozzle device according to the first embodiment of the present invention in a side view.

### FIRST EMBODIMENT

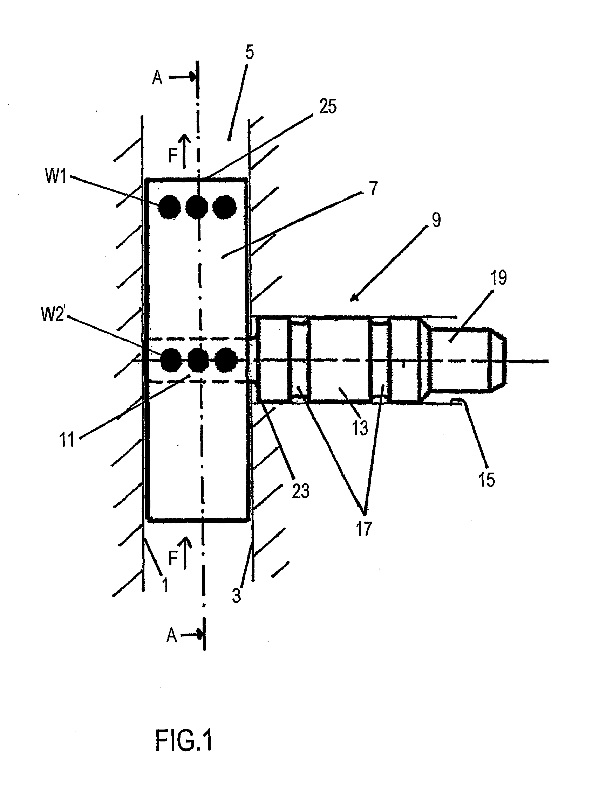

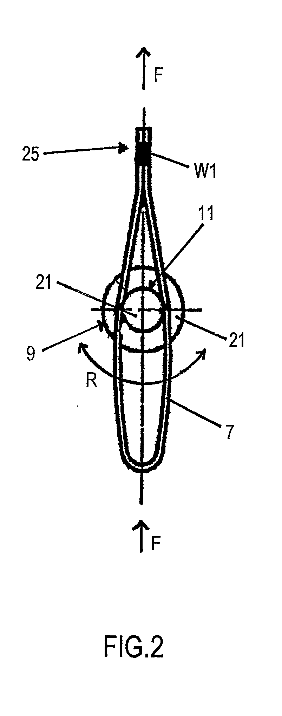

In the following, a variable nozzle device according to the first embodiment of the present invention is explained based on Figs. 1 and 2.

Fig. 1 shows a partial view of a nozzle including a first wall 1 and a second wall 3 which are spaced from each other so as to form a passage 5 between the first wall 1 and the second wall 3. Although not shown in the Figure, the passage 5 is formed in an annular shape which is adapted to be disposed around a turbine wheel (not shown). A flow of a fluid, such as exhaust gas, to be conveyed to the turbine wheel, moves from an upstream end of the vane to a downstream end thereof. The direction of the flow of the fluid is designated by arrows F in the Figures.

A vane 7 is disposed between the first wall 1 and the second wall 3 in the passage 5. As shown in Fig. 2, the vane 7 is wing-shaped in a cross-sectional view along a line A-A in Fig. 1.

The vane 7 is formed by metal sheet strip which is bent such that the wing-shaped contour is obtained. That is, the vane 7 is a hollow body with the axial faces thereof being open. A tip end 25 of the vane 7 is formed by contacting the two ends of the sheet metal after the bending and bonding the ends to each other by spot-welding which is designated by W1 in the drawings.

An end portion of a shaft 9 extends into the hollow interior of the vane 7 and supports the same. As shown in Fig. 1, the sheet metal is in contact with an extension 11 of the shaft 9 on the inside of the hollow interior of the vane 7. For attaching the sheet metal to the extension 11, those portions of the sheet metal which are in contact with the outer circumference of the extension are welded e.g. by spot-welding which is designated by W2 in the drawings.

Besides the extension 11, the shaft 9 comprises a bearing portion 13 the diameter of which is larger than that of the extension 11. The bearing portion 13 of the shaft 9 is fitted into a bearing hole 15 so as to be rotatable. The bearing portion 13 comprises two annular grooves 17 for lubrication the bearing portion 13 in the bearing hole 15 and/or to fix an axial position of the shaft 9 relative to the second wall 3. At the transition between the extension 11 and the bearing portions 13 a step 23 is formed.

Furthermore, the shaft comprises an actuating portion 19 the diameter of which is smaller than that of the bearing portion 13 but larger than that of the extension 11.

With the variable nozzle device according to the present embodiment, the vane 7 which is fixed to the shaft 9 can be rotated about the axial direction of the shaft 9 by rotating the same, wherein the rotational direction of the vane 7 is designated by an arrow R in Fig. 2. In particular, the actuating portion 19 can be rotated by an adjustment mechanism by means of which plural vanes are rotated synchronously. Thereby it is possible to adjust the rotational position of the vane between the first wall 1 and the second wall 3 so as to adapt the flow characteristics of the nozzle.

According to the present embodiment, the transition between the extension 11 and the bearing portion 13 of the shaft 9 is formed which a slightly tapered shape so as to reduce a stress concentration due to the notch effect. Due to this tapered transition, the vane 7 is fixed to the extension 11 of the shaft 9 such that the edge of the vane 7 facing towards the second wall 3 is slightly separated from the bearing portion 13. Therefore, the sheet metal is in contact with the extension 11 only in the cylindrical portion thereof.

### SECOND EMBODIMENT

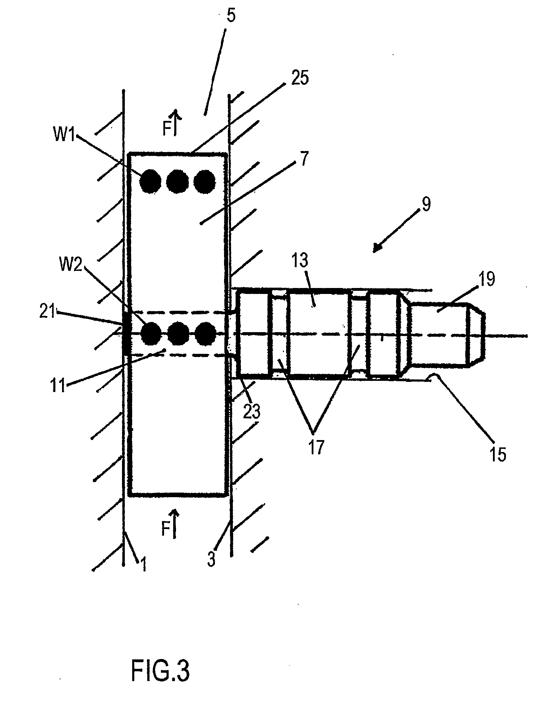

In the following, a variable nozzle device according to the second embodiment of the present invention is explained based on Fig. 3. The structure of the variable nozzle device according to the second embodiment is similar to that of the first embodiment. Therefore, the same reference signs are used for similar elements and only the differences are discussed.

According to the present embodiment, the extension 11 of the shaft 9 slightly protrudes beyond the edge of the vane 7 facing towards the first wall 1. In particular, an axial end surface 21 of the extension 11 which faces towards the first wall 1 is in sliding contact with the first wall 1. Thereby, the edge of the vane 7 and, in particular the sheet metal forming said vane 7, is separated from the surface of the first wall 1. That is, only the axial end portion 21 of the shaft 9 is exerted by the sliding contact whereas the edge of the vane 7 does not contact the first wall 1.

In the present embodiment, the amount of protrusion of the extension 11 beyond the edge of the vane 7 facing towards the first wall is set to 0,05 mm.

### MODIFICATIONS

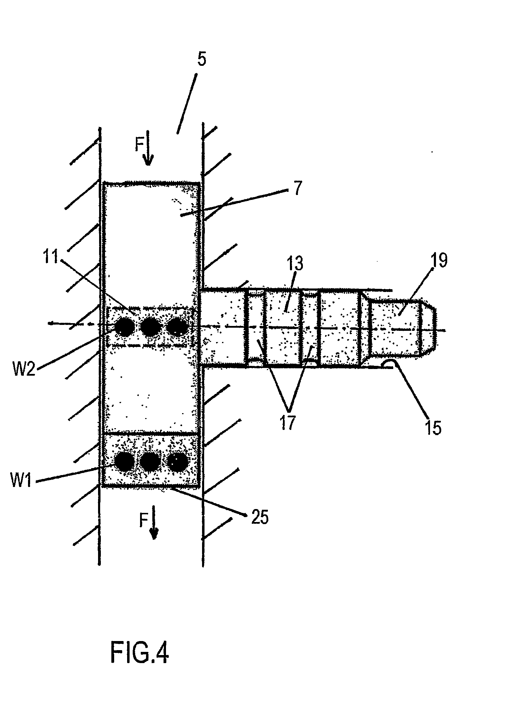

Fig. 4 shows a modification of the first embodiment. As shown in Fig. 4, the structure of the variable nozzle device is formed by a sheet metal bent into a wing shape for forming the vane 7 which is fixed to the extension 11 of the shaft 9.

In the variable nozzle device according to a modification of the first embodiment, the transition between the extension 11 and the bearing portion 13 of the shaft is formed such that that the tapered portion in the region of said transition is eliminated. As can be seen in Fig. 3, the transition is formed by an annular recess at the circumference of the extension 11.

Due to this structure, the vane 7 is set and fixed to the extension 11 such that the edge of the vane 7 facing towards the second wall 3 is in close contact with the axial step between the extension 11 and the bearing portion.

Although throughout the above description of the embodiments it is stated that the variable nozzle device is applicable to an exhaust gas turbine, the variable nozzle device is also applicable to a compressor of a turbocharger.

## Claims

1. A variable nozzle device adapted to be mounted in an exhaust gas turbine of a turbocharger, comprising
an annular nozzle passage (5) formed by a gap between two opposing wall members (1, 3); and
at least one vane (7) extending in said nozzle passage (5) and being rotatably supported by a shaft (9) attached to said vane (7), wherein
said vane (7) is formed by a sheet metal contour formed by wrapping a strip of sheet metal so as to form said contour as a loop, and
wherein at least a portion of said shaft (9) protrudes beyond an edge of said sheet metal contour by a predetermined amount so as to form a stepped portion (21) contactable to one of said opposing wall members (1; 3) thereby separating said sheet metal contour from said one of said opposing wall members (1; 3).

2. A variable nozzle device according to claim 1, wherein a downstream tip (25) of said vane (7) is formed by joining two ends of said strip of said sheet metal.

3. A variable nozzle device according to claim 2, wherein said two ends of said strip of said sheet metal are joined by spot welding.

4. A variable nozzle device according to one of claims 1-3, wherein said shaft (9) extends into said sheet metal contour being attached at least to an outer peripheral portion of said shaft (9).

5. A variable nozzle device according to claim 4, wherein said sheet metal contour is attached to said shaft (9) by spot welding at two peripheral portions of said shaft (9), which are diametrically opposed to each other.

6. An exhaust gas turbine comprising a variable nozzle device according to one of claims 1 to 5 and a turbine wheel which is drivable by exhaust gas passed through the annular nozzle passage of said variable nozzle device.

7. Turbocharger comprising an exhaust gas turbine according to claim 6.

## Patentansprüche

1. Variable Düsenvorrichtung, die angepasst ist, um in einer Abgasturbine eines Turboladers montiert zu werden, mit
einem ringförmigen Düsendurchgang (5), der durch einen Spalt zwischen zwei gegenüberliegenden Wandelementen (1, 3) ausgebildet ist; und
mindestens einer Leitschaufel (7), die sich in dem Düsendurchgang (5) erstreckt und von einer Welle (9), die an der Leitschaufel (7) befestigt ist, drehbar gehalten ist, wobei
die Leitschaufel (7) von einem Metallblechprofil ausgebildet ist, das durch Wickeln eines Metallblechstreifens ausgebildet ist, so dass es das Profil einer Schlaufe ausbildet, und
wobei mindestens ein Abschnitt der Welle (9) über einen Rand des Metallblechprofils um einen vorherbestimmten Betrag hinausragt, so dass er einen Stufenabschnitt (21) ausbildet, der einen der gegenüberliegenden Wandelemente (1; 3) berühren kann, wodurch er das Metallblechprofil von dem einen der gegenüberliegenden Wandelemente (1; 3) trennt.

2. Variable Düsenvorrichtung nach Anspruch 1, wobei eine stromabwärtige Spitze (25) der Leitschaufel (7) durch Verbinden zweier Enden des Metallblechstreifens ausgebildet ist.

3. Variable Düsenvorrichtung nach Anspruch 2, wobei die zwei Enden des Metallblechstreifens durch Punktschweißen verbunden sind.

4. Variable Düsenvorrichtung nach einem der Ansprüche 1 bis 3, wobei die Welle (9) sich in das Metallblechprofil erstreckt, das zumindest an einem äußeren Peripherieabschnitt der Welle (9) angebracht ist.

5. Variable Düsenvorrichtung nach Anspruch 4, wobei das Blechmetallprofil an der Welle (9) durch Punktschweißen an zwei peripheren Abschnitten der Welle (9) angebracht ist, die einander diametral gegenüberliegend sind.

6. Abgasturbine mit einer variablen Düsenvorrichtung nach einem der Ansprüche 1 bis 5 und einem Turbinenrad, das durch Abgas angetrieben werden kann, das durch den ringförmigen Düsendurchgang der variablen Düsenvorrichtung geleitet wird.

7. Turbolader mit einer Abgasturbine nach Anspruch 6.

## Revendications

1. Dispositif à buse variable prévu pour être monté dans une turbine à gaz d'échappement d'un turbocompresseur, comprenant :
un passage de buse annulaire (5) formé par un espace entre deux organes de paroi opposés (1, 3) ; et
au moins une ailette (7) s'étendant dans ledit passage de buse (5) et étant supportée à rotation par une tige (9) attachée à ladite ailette (7),
ladite ailette (7) étant formée par un contour en tôle métallique formé en enveloppant un ruban de tôle métallique de manière à former ledit contour sous forme de boucle, et
au moins une portion de ladite tige (9) faisant saillie au-delà d'un bord dudit contour en tôle métallique d'une quantité prédéterminée de manière à former une portion étagée (21) pouvant être amenée en contact avec l'un desdits organes de paroi opposés (1 ; 3) pour ainsi séparer ledit contour en tôle métallique dudit un desdits organes de paroi opposés (1 ; 3).

2. Dispositif à buse variable selon la revendication 1, dans lequel une pointe aval (25) de ladite ailette (7) est formée en reliant deux extrémités dudit ruban de ladite tôle métallique.

3. Dispositif à buse variable selon la revendication 2, dans lequel lesdites deux extrémités dudit ruban de ladite tôle métallique sont reliées par soudage par point.

4. Dispositif à buse variable selon l'une quelconque des revendications 1 à 3, dans lequel ladite tige (9) s'étend dans ledit contour en tôle métallique qui est attaché au moins à une portion périphérique externe de ladite tige (9).

5. Dispositif à buse variable selon la revendication 4, dans lequel ledit contour en tôle métallique est attaché à ladite tige (9) par soudage par point en deux portions périphériques de ladite tige (9), qui sont diamétralement opposées l'une à l'autre.

6. Turbine à gaz d'échappement comprenant un dispositif à buse variable selon l'une quelconque des revendications 1 à 5 et une roue de turbine qui peut être entraînée par le gaz d'échappement ayant passé à travers le passage de buse annulaire dudit dispositif à buse variable.

7. Turbocompresseur comprenant une turbine à gaz selon la revendication 6.
